# DEMANDE DE BREVET EUROPEEN

(11) **EP 4 789 525 A1**
(43) Date de publication de la demande: **12.08.2026**
(21) Numéro de dépôt: 26157051.9
(22) Date de dépôt: 06.02.2026
(51) Int. Cl.: A01C 17/00

(54) **PROCÉDÉ D'ESTIMATION ET D'EXPLOITATION DE CARACTÉRISTIQUES D'ÉJECTION DE PARTICULES DANS UN SYSTÈME D'ÉPANDAGE, ET DISPOSITIF CORRESPONDANT**

(30) Priorité: 07.02.2025 FR 2501291
(71) Demandeur: Burel Production, 35220 Chateaubourg (FR)
(72) Inventeur: LEVEILLE, Lionel, 35500 VITRE (FR); JUHEL, Thomas, 35140 SAINT AUBIN DU CORMIER (FR); PIRON, Emmanuel, 03300 CREUZIER LE VIEUX (FR); MICLET, Denis, 03150 VARENNES SUR ALLIER (FR); VILLETTE, Sylvain, 21000 DIJON (FR)
(74) Mandataire: Vidon Brevets & Stratégie

(57) **Abrégé**

L'invention concerne un procédé d'estimation et d'exploitation de données représentatives de l'éjection de particules, dont au moins un angle moyen d'éjection, comprenant les étapes de :
- obtention (191) d'une pluralité de mesures d'une réaction délivrées par lesdits moyens de mesure, réalisée sur une série de tours d'une pale de mesure ;
- association (192), à chaque mesure d'une réaction, d'une information représentative de la position angulaire de ladite pale de mesure ;
- construction (193) d'une cartographie de la distribution angulaire de la réaction sur ladite pale de mesure sur un tour, à partir de ladite pluralité de mesures ;
- identification (194) d'un sommet sur ladite cartographie de la distribution angulaire de la réaction, correspondant à un angle de début de l'épandage ;
- estimation (195) dudit angle moyen d'éjection, tenant compte dudit sommet.

## Description

### 1. Domaine de l'invention

Le domaine de l'invention est celui de l'épandage de particules, par exemple d'engrais ou de semis, notamment sous une forme granulaire.

Plus précisément, l'invention concerne le contrôle de l'épandage assuré par une machine d'épandage agricole, et notamment l'estimation de caractéristiques d'éjection telles que la distribution angulaire des particules délivrés par un système d'épandage, tel qu'un distributeur d'engrais.

### 2. Art antérieur

Les machines d'épandage se présentent généralement sous la forme d'un tracteur portant une trémie (réservoir) contenant les particules, engrais ou semis à épandre par exemple.

Selon une technique classique, le fond de la trémie comprend au moins une ouverture laissant passer le contenu de la trémie vers un distributeur comprenant au moins un plateau rotatif (généralement deux plateaux tournant en sens inverses l'un par rapport à l'autre) portant une ou plusieurs (généralement deux à quatre, voire six) pales de projection, par exemple par l'intermédiaire d'une goulotte de transfert placée en surplomb du ou des plateaux.

Les plateaux rotatifs sont le plus souvent disposés dans une position sensiblement horizontale et leur rotation autour d'un axe sensiblement vertical assure la projection des particules, guidées le long des pales, par effet centrifuge, sous la forme d'une nappe s'étendant à l'arrière de la machine d'épandage.

Classiquement, les distributeurs équipant les machines d'épandage du domaine de l'agriculture utilisent au moins deux plateaux rotatifs tournant en sens inverses l'un par rapport à l'autre, une telle configuration permettant de réaliser un épandage en engrais sur une grande largeur, généralement comprise entre 5 et 50 mètres, en fonction des paramètres de commande transmis au distributeur.

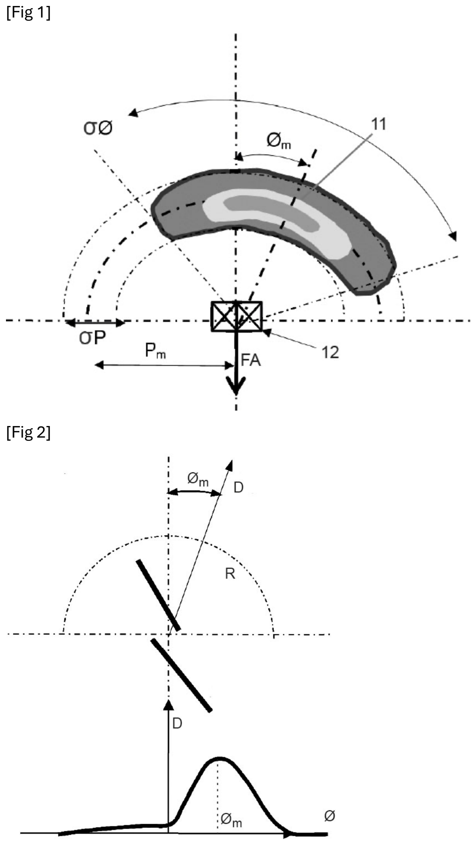

La figure 1 illustre schématiquement la position spatiale (répartition instantanée) au sol d'une nappe d'épandage 11 pour le plateau d'épandage gauche lors de l'avancement du tracteur selon la flèche FA. La nappe d'épandage du plateau droite (non représentée) se combine à la nappe 11, de façon qu'elles se chevauchent dans une zone centrale pour former une nappe d'épandage globale.

La forme et les dimensions de la nappe, ainsi que sa position par rapport au distributeur 12 varient en fonction de nombreux paramètres, tels que :
- la vitesse de rotation du plateau,
- la hauteur et l'inclinaison du plateau,
- l'orientation et la position des pales,
- le point de chute de l'engrais sur le plateau,
- la granulométrie des particules,
- la masse volumique des particules,
- le coefficient de frottement des particules d'engrais dans la pale,
- la balistique des particules d'engrais,
- les conditions météorologiques et hygrométriques, notamment le degré d'humidité des particules,
- etc.

Il est également connu de l'état de l'art de régler la position angulaire de cette nappe suivant la position de la machine agricole dans la parcelle, notamment pour améliorer l'épandage en bordure de parcelle tel que décrit dans EP1955579 ou améliorer le recouvrement entre les passages dans les pointes tel que décrit dans EP2409559.

La caractérisation de la nappe en temps réel est donc utile pour obtenir un épandage précis et correspondant à une consigne prédéterminée, dans le cadre d'une agriculture de précision optimisant les dosages.

De nombreuses études ont été effectuées, conduisant à la représentation classique de la figure 1, utilisant les variables de mesure usuelles suivantes :

| | | |
|---|---|---|
| - | Pmoyen : | portée moyenne |
| - | σP : | écart type sur la portée |
| - | Ømoyen : | angle moyen d'éjection |
| - | σØ : | écart-type sur l'angle d'éjection |
| - | vt : | composante de vitesse tangentielle |
| - | vr : | composante de vitesse radiale |
| - | v : | résultante du vecteur vitesse (direction d'éjection du produit en sortie de pale) |
| - | α : | |

Le document EP1610112 décrit une façon de déterminer la plupart de ces variables, par la mesure de la nappe au sol.

La connaissance de la distribution angulaire, de son angle moyen et son écart-type notamment, est en particulier essentielle. On sait qu'il est possible de le modifier, pour un type de particules donnée, en déplaçant le point de chute des particules sur le plateau rotatif 15, par exemple par l'intermédiaire d'une goulotte articulée.

Comme illustré sur la figure 2, les analyses montrent que la densité de particules suit une courbe 21 formant sensiblement une courbe de Gauss, dont le point haut correspond à l'angle d'éjection moyen.

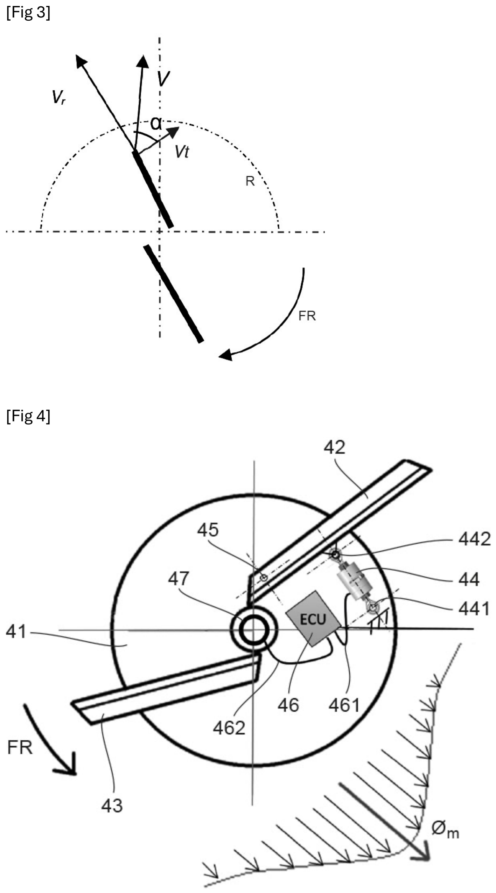

La figure 3 illustre, de façon schématique, l'angle d'éjection dans la pale.

De nombreuses techniques ont été proposées pour déterminer ou estimer la zone d'éjection. Elles sont souvent complexes, et peu satisfaisantes en termes de précision notamment. Elles ne permettent pas de connaître efficacement la distribution angulaire.

Il a par exemple été proposé de mesurer le flux de particules délivré par les pales, à l'aide de radars (par exemple EP2758745 ou EP2520148, utilisant l'effet Doppler, ou EP2783580). Ces systèmes offrent une précision insuffisante (il faut autant de radars que d'informations angulaires mesurées. Ainsi 10 radars par disque ne fournissent que 10 mesures sur les 360° de rotation du disque, soit une très forte discrétisation), sont complexes et peu fiables sur la durée, du fait de la proximité des radars avec le flux de particules, qui détériore les radars, par exemple par sablage. De plus, les capteurs saturent à des débits élevés et ne détectent pas les débits très faibles.

Ces systèmes sont en outre limités en conditions très poussiéreuses et humides. Il est nécessaire de nettoyer les capteurs régulièrement, du fait de l'écho très faible (les particules étant très petites).

Le document EP0682857 propose une autre technique de mesure du flux en sortie des pales, mettant en œuvre deux capteurs d'impact. Elle présente cependant les mêmes inconvénients.

Il a également été envisagé, dans le document EP0311202, différentes techniques pour détecter le début et la fin de l'éjection et une quantité de produit distribué sur chaque tour, pour en déduire un débit, dont une approche consistant à mesurer un effort appliqué sur une pale.

Cette approche est intéressante, mais inefficace en pratique. En particulier, elle ne permet pas de connaître précisément l'angle moyen d'éjection (qui n'est pas, comme le suggère ce document, le milieu entre le début et la fin de la réaction relevée sur la pale) et l'écart-type associé. Elle ne permet pas non plus de connaitre la distribution angulaire, et moins encore des caractéristiques de la nappe au sol.

Il a également été envisagé d'effectuer une mesure dynamique de la nappe au sol, à l'aide de caméras (comme décrit par exemple dans le document EP0751703). A nouveau, cette approche est complexe et insuffisamment précise. Elle en particulier sensible à l'encrassement.

Il existe donc un besoin d'une solution plus efficace, permettant de déterminer de façon plus précise des informations relatives à l'éjection des particules, notamment la distribution angulaire, l'angle d'éjection moyen et l'écart-type, par exemple avec une précision de l'ordre d'un degré (au moins sur un secteur angulaire important, par exemple entre 140° et 200°), de façon simple et efficace, qui soit fiable et peu sensible aux intempéries, aux conditions environnementales délicates (poussière, humidité, encrassement...) ou aux détériorations, et/ou qui permettent d'obtenir des mesures que le débit soit très faible (inférieur à 1 kg/min par disque) ou très élevé (supérieur à 200kg/min par disque).

### 3. Présentation de l'invention

### 3.1 procédé d'estimation et d'exploitation de caractéristiques représentatives de l'éjection de particules

L'invention concerne notamment un procédé d'estimation et d'exploitation de données représentatives de l'éjection de particules, dont au moins un angle moyen d'éjection, dans un système d'épandage comprenant au moins une pale d'éjection entrainée en rotation par un arbre de rotation, dont au moins une pale de mesure, équipée de moyens de mesure d'une réaction mécanique, variant notamment en présence desdites particules dans ladite pale de mesure.

Selon l'invention, le procédé comprend les étapes de :
- obtention d'une pluralité de mesures d'une réaction délivrées par lesdits moyens de mesure, réalisée sur une série de tours de ladite pale de mesure ;
- association, à chaque mesure d'une réaction, d'une information représentative de la position angulaire de ladite pale de mesure ;
- construction d'une cartographie de la distribution angulaire de la réaction sur ladite pale de mesure sur un tour, à partir de ladite pluralité de mesures ;
- identification d'un sommet sur ladite cartographie de la distribution angulaire de la réaction, correspondant à un angle de début de l'épandage ;
- estimation dudit angle moyen d'éjection, tenant compte dudit sommet.

Ainsi, l'invention propose une approche efficace de détermination de l'angle moyen d'éjection, basée sur la prise en compte et l'analyse précise d'une cartographie de la distribution angulaire. Un élément essentiel du procédé est donc la détection du sommet de la courbe, c'est-à-dire du début de la phase d'éjection des particules. Une cartographie s'entend ici d'une représentation précise, de préférence sur 360°, obtenue en prenant en compte, notamment par sommation, des mesures obtenues sur une pluralité de tours, avec un pas de mesure angulaire faible, de préférence inférieure à 1°.

Selon un mode de réalisation particulier, ladite étape d'identification d'un sommet prend en compte au moins une autre information issue de ladite cartographie de la distribution angulaire de la réaction.

Ceci permet d'obtenir des estimations plus précises.
Notamment, le procédé peut comprendre comprend les étapes de :
- détermination d'une portion descendante de ladite cartographie de la distribution angulaire suivant ledit sommet, correspondant à une phase angulaire de distribution de particules ;
- détermination d'un angle moyen d'éjection, situé dans ladite portion descendante.

Selon une mise en œuvre particulière, ladite étape de construction d'une cartographie comprend une sous-étape d'identification d'une représentation sous la forme d'une gaussienne équivalente, d'une quasi-gaussienne équivalente, d'une double gaussienne équivalente ou d'une loi normale asymétrique équivalente, délivrant au moins une information représentative de l'angle moyen d'éjection et de l'écart-type d'éjection.

Cette approche permet l'obtention d'une représentation très proche de la réalité, et de déterminer efficacement plusieurs informations utiles. Lorsqu'on dispose d'une telle représentation, les étapes précédemment décrites s'appliquant sur la cartographie peuvent également être appliquées, selon l'invention, sur la représentation.

Ainsi, ladite sous-étape d'identification peut délivrer également une information d'offset, représentatif de la valeur de ladite distribution angulaire en l'absence de particules, et une information de hauteur, représentatif de l'écart entre ladite valeur d'offset et ledit sommet.

Selon un aspect particulier, ladite sous-étape d'estimation dudit angle moyen d'éjection tient compte de la position du point d'alimentation et/ou l'angle de dépose du produit sur le plateau.

Le procédé comprend également avantageusement une étape de réglage d'au moins un élément dudit système d'épandage permettant de faire varier au moins une caractéristique de la nappe d'épandage au sol, à partir d'une comparaison entre ladite estimation d'au moins une donnée représentative de l'éjection des particules et une consigne correspondante, ledit réglage agissant sur un point d'alimentation en particules, une position d'au moins une desdites pales, une vitesse de rotation desdites pales et/ou une inclinaison dudit système d'épandage.

Il est ainsi possible de créer une boucle de rétroaction, permettant de régler en temps réel, ou quasi-temps réel, les moyens d'épandage pour que l'épandage obtenu corresponde le plus possible à l'épandage souhaité, défini par la consigne.

Ainsi, ladite étape de réglage peut mettre en œuvre une boucle de rétroaction comprenant les sous-étapes suivantes :
- sélection d'une consigne d'angle d'éjection moyen souhaité, pour un produit et une largeur de travail de donnée ;
- obtention d'une estimation de l'angle d'éjection moyen réel des particules ;
- détermination d'un écart entre ladite estimation de l'angle d'éjection des particules et ladite consigne d'angle d'éjection souhaitée ;
- modification d'un point d'alimentation desdites particules par rapport auxdites pales, pour réduire ledit écart, à l'aide d'au moins un actionneur dudit système d'épandage.

Selon un aspect particulier, le procédé peut comprendre une étape de pilotage d'un système d'épandage en bordure mettant en œuvre une pale.

Notamment, ladite étape de pilotage tient compte d'une proportion résiduelle de particules prise par une pale longue lors d'un épandage en bordure.

On met ainsi en œuvre une boucle de rétroaction pour le réglage en bordure, dont la précision est importante dans le cadre des exigences environnementales et normatives.

Notamment, selon un mode de traitement particulier, ladite étape de traitement de données comprend les sous-étapes de :
- cumul dudit signal représentatif de ladite réaction sur un nombre prédéterminé de tours dudit support ou dudit plateau, délivrant un signal cumulé ;
- détermination d'une première position angulaire correspondant à une réaction maximale sur la gaussienne ;
- détermination d'une seconde position angulaire correspondant à un retour à un effort minimal prédéterminé (par exemple compris entre 10 à 30%, par exemple 20%, de l'effort maximal) ;
- calcul d'une moyenne entre ladite première position angulaire et ladite seconde position angulaire, correspondant à un angle d'éjection moyen.

Selon un autre aspect particulier de l'invention, le procédé peut comprendre une étape d'estimation de l'angle moyen de la nappe au sol, tenant compte de l'angle moyen d'éjection et d'au moins une autre des informations appartenant au groupe comprenant :
- une information représentative du type de particules épandues ;
- une information représentative de la machine de distribution et/ou du plateau et/ou de la pale de mesure ;
- une information représentative de la position du point d'alimentation des particules sur le plateau ;
- une information représentative de la vitesse de rotation du plateau.

Notamment, ladite étape d'estimation de l'angle moyen de la nappe au sol peut mettre en œuvre une équation du type : ${α}_{sol} = A . x + B . x . y + C . y + D . w + E$ où:
x : écart-type de l'angle d'éjection ;
y : delta goulotte et angle mesuré ;
z : delta goulotte et angle capteur ;
w : angle d'éjection moyen ;
A, B, C, D et E sont des constantes prédéterminées.

Selon un autre aspect particulier, le procédé peut comprendre une étape d'estimation de l'écart-type de la portée de projection.

Lorsque ladite pale de mesure est une pale étagée comprenant deux canaux d'éjection superposés, le procédé peut déterminer au moins un angle moyen et/ou un écart-type pour chacun desdits canaux.

Selon une caractéristique particulière, le procédé de l'invention peut comprendre une étape d'analyse d'une variation du signal de distribution angulaire, délivrant une information représentative d'une usure de ladite pale de mesure en fonction d'une analyse du bruit et/ou d'au moins fréquence spécifique sur ledit signal de distribution angulaire.

Cette approche permet, en détectant une atténuation et/ou une perturbation du signal, d'obtenir une information représentative d'une formation de défauts ou de vagues sur ladite pale de mesure.

Le procédé peut également comprendre une étape d'analyse d'une variation de l'effort sur ladite pale de mesure, délivrant une information d'encrassement de ladite pale en fonction d'une augmentation prédéterminée de ladite réaction.

Ceci permet de détecter un encrassement, et d'informer l'utilisateur qu'une intervention de nettoyage est souhaitable.

### 3.2 dispositif adapté à la mise en œuvre du procédé

Le procédé de l'invention peut être mise en œuvre par un dispositif d'estimation et d'exploitation de données représentatives d'au moins une caractéristique d'éjection de particules, dont au moins un angle moyen d'éjection, dans un système d'épandage comprenant au moins une pale d'éjection entrainée en rotation par un arbre de rotation.

Ce dispositif comprend :
- des moyens de mesure d'une réaction mécanique de ladite ou au moins une desdites pales d'éjection, dite pale de mesure, au passage desdites particules dans chacune desdites pales de mesure, délivrant un signal représentatif de ladite réaction,
- des moyens d'obtention d'une information représentative de la position angulaire de ladite pale de mesure, et
- des moyens de traitement de données délivrant au moins une estimation d'au moins une desdites données représentatives de l'éjection, notamment l'angle d'éjection moyen, tenant compte dudit signal représentatif de ladite réaction et de ladite information représentative de la position angulaire de la pale de mesure.

Ainsi, le dispositif repose sur une mesure de la réaction, par exemple des efforts, engendrée par la propagation de l'engrais sur les pales. On mesure et on analyse ces efforts pour en étudier la variation dans le temps et suivant la position angulaire.

On dispose ainsi d'un dispositif efficace, intégré au système d'épandage, mesurant l'intensité (module) de l'effort de réaction à l'épandage sur la pale, et non quelques mesures sur un flux diffus de particules en sortie de la pale.

On mesure directement dans la pale, quel que soit le diamètre du plateau et la longueur de la pale, alors que les systèmes connus mesurent après sortie de la pale : par exemple, les radars mesurent 15cm après le plus grand rayon de pales (un épandeur ayant des plateaux de rayon variant entre 150mm et 600mm). L'invention est ainsi bien adaptée à la variété de longueur de pales.

L'invention permet des mesures sur toute une révolution des pales, même si ces mesures peuvent en pratique être limitées à un secteur angulaire utile et de grande amplitude, par exemple de l'ordre de 180° (notamment entre 140 degrés et 200°) avec une précision de l'ordre de 1° (compris entre 0,5 et 3° par exemple), avec une capacité à mesurer des débits très faibles (notamment inférieur à 1 kg/min par disque) et des débits très élevés (notamment supérieur à 200kg/min par disque), soit une plage de débits allant bien au-delà de ce que permettent les radars, et dans des conditions environnementales délicates, notamment en présence de poussière, d'humidité ou d'encrassement.

Ces différents aspects se combinent de façon efficace.

Le dispositif permet par ailleurs de fournir des résultats très précis, par rapport aux systèmes à radars ou caméras, qui permettent d'obtenir un histogramme avec un nombre réduit de mesures, qu'il est ensuite nécessaire d'extrapoler, ou lisser, sous la forme d'une gaussienne forcément imprécise du fait de ce nombre réduits de mesures. Au contraire, l'invention permet d'obtenir un nombre très élevé d'échantillons, que l'on peut ensuite simplifier sous la forme d'une gaussienne, symétrique ou asymétrique, très précise.

Chaque mesure de réaction dans la pale est associée à une information sur la position angulaire de la pale, permettant de déterminer un angle correspondant à l'effort mesuré (par exemple via un capteur angulaire ou un « top tour », permettant une synchronisation des mesures). On dispose ainsi d'une distribution angulaire de l'effort sur la pale sur l'ensemble de la révolution du plateau ou une partie substantielle de celle-ci (partie utile pour l'obtention de caractéristiques représentatives de l'éjection).

L'analyse de ces données permet de connaître, de façon précise, différentes informations relatives à l'éjection, dont l'angle moyen d'éjection, et plus généralement, selon des traitements décrits par la suite, la gaussienne, ou courbe de Gauss, représentative de l'éjection, et le cas échéant une estimation de la nappe au sol correspondante, ou des informations relatives au fonctionnement (épandage pleine largeur ou en mode bordure) ou la maintenance préventive...

Selon un aspect particulier de l'invention, au moins une desdites estimations alimente des moyens de réglage d'au moins un élément dudit système d'épandage permettant de faire varier au moins une caractéristique de la nappe d'épandage au sol, comparant ladite estimation à une consigne correspondante et adaptant le réglage du ou desdits paramètres du système d'épandage en conséquence.

Il est ainsi possible de régler efficacement l'épandage, de façon que la nappe obtenue corresponde le plus précisément possible à une consigne souhaitée. La ou les caractéristiques de la nappe peuvent notamment être l'angle moyen, l'écart-type, la largeur, et plus généralement les caractéristiques mentionnées plus haut en lien avec la figure 1.

Le réglage peut agir en particulier sur le point d'alimentation (également appelé point de dépôt, point de dépose ou point de chute) et/ou la dose de particules.

Notamment, lesdits moyens de réglage peuvent mettre en œuvre une boucle de rétroaction visant à minimiser une comparaison entre un angle d'éjection moyen souhaité-et une estimation d'un angle d'éjection moyen réel.

Selon un mode de réalisation particulier, ladite pale de mesure est solidaire desdits moyens de mesure d'une réaction.

Ainsi, la pale est liée mécaniquement aux moyens de mesure, directement ou via son support, et la mesure est effectuée au niveau de la pale (on mesure l'effet des particules dans la pale) et non après que les particules ont été éjectées, comme c'est le cas selon les techniques connues à base de radars ou de caméras notamment.

Selon un autre aspect particulier, lesdits moyens d'obtention d'une information représentative de la position angulaire comprennent un capteur angulaire et/ou un moyen de détection d'un début de tour de ladite pale de mesure.

Notamment, un « top tour » (détection du début d'un tour) peut être suffisant pour déterminer la position angulaire de chaque mesure. Ce détecteur de début de tour peut être monté sur la pale, le plateau ou un support de la pale. Selon sa position, un recalage peut être pris en compte, par exemple pour délivrer des données angulaires référencées à partir d'une référence, par exemple l'axe de déplacement.

Selon différentes mises en œuvre, lesdits moyens de mesure peuvent comprendre au moins un capteur d'effort et/ou un capteur de torsion et/ou au moins un capteur piézo-électrique et/ou au moins une jauge de contrainte.

Notamment, lesdits moyens de mesure d'une réaction peuvent comprendre un capteur d'effort dont une première extrémité est solidarisée à ladite pale de mesure, ou à un support de ladite pale, et une seconde extrémité est solidarisée à un plateau portant ladite pale de mesure, ou à un support de ladite pale.

Dans ce cas, ladite pale de mesure peut être montée libre en rotation sur un axe sensiblement perpendiculaire audit support et/ou audit plateau d'épandage, formant liaison pivot.

Selon un premier mode de réalisation, ladite première extrémité peut être placée entre ladite liaison pivot et l'extrémité distale de ladite pale.

Selon un deuxième mode de réalisation, ladite première extrémité est placée entre ledit arbre et ladite liaison pivot.

Selon une autre approche, lesdits moyens de mesure d'une réaction comprennent au moins deux capteurs de force distribués le long de ladite pale.

Selon cette variante, on bloque tous les degrés de liberté, et il n'y a donc pas de pivot. Les deux capteurs peuvent être physiquement séparés ou regroupés, par exemple sous la forme d'un capteur 6 axes.

Selon une autre approche, lesdits moyens de mesure d'une réaction mécanique peuvent mesurer des déplacements de l'arbre de rotation portant la pale de mesure, cet arbre subissant des forces représentatives de cette réaction mécanique.

Notamment, il est possible de mesurer un ou plusieurs efforts appliqués sur l'arbre de rotation, correspondant à un effort de blocage en translation du plateau.

Plusieurs, notamment deux ou trois, capteurs peuvent être distribués autour de l'arbre.

Selon un aspect particulier, une desdites pales est une pale destinée à un système d'épandage en bordure, et lesdits moyens de traitement de données délivrent une commande de pilotage dudit système de bordure ou une information d'aide au pilotage dudit système de bordure.

Ceci permet de gérer efficacement l'épandage en bordure.

Selon un autre aspect particulier, lesdits moyens de mesure d'une réaction comprennent deux capteurs de force distribués sur la hauteur de ladite pale, celle-ci comprenant deux canaux étagés.

Il est ainsi possible de mettre en œuvre l'invention avec des pales dites étagées.

Selon une mise en œuvre particulière, lorsqu'au moins deux pales sont mises en œuvre autour d'un même arbre, le dispositif peut comprendre au moins deux pales de mesure, coopérant chacune avec au moins un capteur d'une réaction.

Selon un mode de réalisation particulier, lesdits moyens de mesure d'un effort coopèrent avec des moyens de traitement électronique aptes à mettre en forme un signal de mesure brut et délivrant un signal prétraité représentatif de ladite réaction.

Ces moyens de traitement peuvent être montés à proximité des pales, par exemple sous le support ou le plateau, et être entrainés en rotation simultanément avec les pales.

Le traitement peut notamment comprendre un filtrage et un regroupement d'une série de mesures sur plusieurs tours. Il peut également être appliqué au signal de position angulaire.

Lesdits moyens de traitement électronique peuvent également comprendre des moyens de transmission sans fil dudit signal prétraité.

Selon un aspect particulier, le dispositif comprend au moins un bobinage monté à rotation sur ledit arbre de rotation et coopérant avec un générateur d'un champ magnétique statique monté fixe sur un bâti pour délivrer une alimentation électrique.

Ceci permet notamment d'alimenter les moyens de traitement et/ou les moyens de transmission, sans nécessiter de batterie ni de câble d'alimentation.

Selon un autre aspect, lesdits moyens de mesure peuvent délivrer une information représentative du module dudit effort, de façon à déterminer une estimation d'un débit massique de particules.

L'invention concerne également un système, ou machine, d'épandage comprenant un dispositif d'estimation tel que décrit ci-dessus. Un tel système comprend donc au moins une pale d'éjection entrainée en rotation par un arbre de rotation, et au moins un dispositif d'estimation de données représentatives d'au moins une caractéristique d'éjection de particules, dont au moins un angle moyen d'éjection, comprenant :
- des moyens de mesure d'une réaction mécanique de ladite ou au moins une desdites pales d'éjection, dite pale de mesure, au passage desdites particules dans chacune desdites pales de mesure, délivrant un signal représentatif de ladite réaction,
- des moyens d'obtention d'une information représentative de la position angulaire de ladite pale de mesure, et
- des moyens de traitement de données délivrant au moins une estimation d'au moins une desdites données représentatives de l'éjection tenant compte dudit signal représentatif de ladite réaction et de ladite information représentative de la position angulaire de la pale de mesure.

Un tel système peut également comprendre des moyens de réglage d'au moins un élément dudit système d'épandage permettant de faire varier au moins une caractéristique de la nappe d'épandage au sol, comparant ladite estimation à une consigne correspondante et adaptant le réglage du ou desdits éléments du système d'épandage en conséquence.

### 4. liste des figures

D'autres caractéristiques et avantages de l'invention apparaîtront plus clairement à la lecture de la description suivante de modes de réalisation préférentiels, donnés à titre d'exemples illustratifs et non limitatifs, et des figures annexées parmi lesquels :
- la figure 1 illustre schématiquement un exemple de position spatiale (répartition instantanée) au sol d'une nappe d'épandage ;
- la figure 2 représente une mesure de répartition angulaire en sortie de plateau ;
- la figure 3 représente l'angle d'éjection dans la pale ;
- la figure 4 illustre de façon schématique un exemple de mise en œuvre d'un dispositif selon l'invention ;
- la figure 5 est une vue partielle du plateau de la figure 4, portant un exemple de capteur d'effort associé à une pale ;
- les figures 6A et 6B illustrent une variante de mise en œuvre, respectivement en vue de dessus et vue de dessous, selon laquelle les pales sont montées sur des supports adaptées ;
- la figure 7 est une vue en coupe simplifiée illustrant la mise en œuvre d'un circuit imprimé monté sur le plateau, et les éléments avec lesquels il coopère ;
- La figure 8 illustre un exemple de mesures effectuées à l'aide d'un dispositif selon l'invention ;
- La figure 9 est un organigramme illustrant un mode de détermination de l'angle d'éjection et de l'écart-type d'éjection, à partir des mesures délivrées par le capteur ;
- La figure 10 est un organigramme illustrant un autre mode de détermination de l'angle d'éjection et de l'écart-type d'éjection, à partir des mesures délivrées par le capteur ;
- La figure 11 présente le résultat de certaines étapes de l'organigramme de la figure 10, appliqué sur les mesures de la figure 8 ;
- La figure 12 illustre une variante de la détermination de l'angle moyen d'éjection ;
- La figure 13 est un exemple de signal mesuré dans le cas d'une pale étagée, conduisant à une approximation sous la forme d'une bi-gaussienne ;
- La figure 14 est un exemple de mise en œuvre comprenant une pale adaptée au traitement en bordure ;
- La figure 15 est un exemple de mise en œuvre dans lequel les deux pales sont associées chacune à un capteur ;
- La figure 16 présente une gaussienne et une amplitude cumulée théoriques ;
- La figure 17 est un organigramme illustrant une boucle de rétroaction permettant de contrôler le réglage de la largeur et de l'orientation de l'épandage ;
- La figure 18 illustre un autre mode de réalisation, les moyens de mesure détectant un déplacement de l'arbre ;
- La figure 19 est un organigramme simplifié du procédé de l'invention ;
- La figure 20 illustre un exemple de gaussienne (courbe de Gauss) obtenue selon l'invention, ainsi que certaines informations qui peuvent en être déduites ;
- La figure 21 illustre l'effet de la position du point d'alimentation sur la direction d'éjection en sortie de pale.

### 5. description de modes de réalisation

### 5.1 principe général du dispositif

### 5.1.1 domaine d'application

L'invention s'applique aux systèmes de distribution de particules mettant en œuvre au moins un plateau, ou disque, équipé d'au moins une pale éjectant les particules déposées sur le plateau, par exemple via une goulotte d'alimentation, lorsque le plateau est mis en rotation. L'invention propose une solution robuste et efficace de mesure sans contact notamment de l'angle d'éjection des engrais, ou autres particules, en sortie de plateau, ou disque. Plus généralement, l'invention permet de déterminer des caractéristiques de l'éjection, telles que les caractéristiques d'une gaussienne représentative de l'éjection, et le cas échéant d'autres informations, relatives notamment à la nappe au sol ou à la maintenance.

### 5.1.2 solutions connues

Contrairement aux solutions connues de l'art antérieur, l'invention ne cherche pas à mesurer les particules « en vol », après l'éjection hors de la pale, à l'aide de radars ou de caméras par exemple, mais mesure la réaction sur la pale du passage du produit, par exemple l'effort appliqué sur une des pales, dite pale de mesure, voire sur les deux pales (pour un plateau équipé de deux pales). Plus précisément, l'invention repose sur la mesure d'une intensité (module) de l'effort sur la pale, et la synchronisation de cette mesure avec la position angulaire de la pale.

En effet, lorsque le plateau est en rotation et que des particules sont délivrées, à un point d'alimentation déterminé, elles sont reçues dans la pale puis éjectées de celle-ci sous l'effet de la force centrifuge. La force appliquée sur la pale à chaque instant, et donc à chaque position angulaire, permet d'estimer la quantité de particules présente dans la pale, qui augmente progressivement jusqu'à atteindre un maximum, correspondant à un angle moyen d'éjection. L'ensemble des mesures permet de déterminer les caractéristiques de la gaussienne des efforts d'éjection, représentative de la gaussienne de l'angle d'éjection, caractérisée en particulier par un angle d'éjection moyen de l'engrais et un écart-type.

Le plateau peut être équipé de moyens de traitement de données, recevant les mesures délivrées par le ou les capteurs, les traitant, au moins pour les associer à une information de position angulaire, et les transmettant vers une unité d'analyse et de restitution, de préférence via une communication sans fil.

### 5.1.3 l'approche connue de EP311202

Le document EP311202 propose, parmi plusieurs approches, d'équiper l'une des pales d'un film résistif, dont la résistance varie en fonction de l'action appliquée par les particules dans une pale montée mobile en rotation. C'est cette approche que met en œuvre l'invention, selon un procédé nouveau et inventif.

En effet, l'approche proposée dans EP311202 ne fonctionne pas, et est basée sur des interprétations erronées, ce qui conduit à l'écarter immédiatement. Tout d'abord, ce document considère que le début de l'éjection est le début de la mesure d'une réaction, par assimilation aux autres approches envisagées qui effectuent des mesures en sortie de pale. De plus, il prévoit que la mesure est approximativement constante et uniforme, sauf en cas de défaut de l'éjection.

Les inventeurs ont constaté que ceci n'est absolument pas le cas, et ont développé une interprétation et une utilisation efficaces des mesures pouvant être obtenues avec des capteurs adaptés et un procédé de traitement des données spécifiques, qu'ils ont développé.

### 5.2 exemple de mise en œuvre d'un dispositif adapté pour le procédé de l'invention

La figure 4 illustre un exemple de réalisation d'un dispositif pour la mise en œuvre de l'invention. Le plateau 41 est équipé classiquement de deux pales 42 et 43. Dans ce mode de réalisation, seule la pale principale 42 est équipée d'un capteur 44.
La seconde pale 43, ici de longueur réduite, peut bien sûr être également équipé d'un capteur identique ou similaire.

La pale de mesure 42 est montée sur une liaison pivot 45, libre en rotation sur un axe perpendiculaire au plan du plateau (axe vertical lorsque le plateau est horizontal). Le capteur 44 est ici par un capteur de l'effort de blocage de la pale.

Il est à noter que le plateau se présente sur cette figure sous la forme d'un disque essentiellement plein, mais qu'il est possible que la surface du plateau soit partiellement voire totalement supprimée, les pales pouvant être entrainées par l'arbre par l'intermédiaire d'un support adapté.

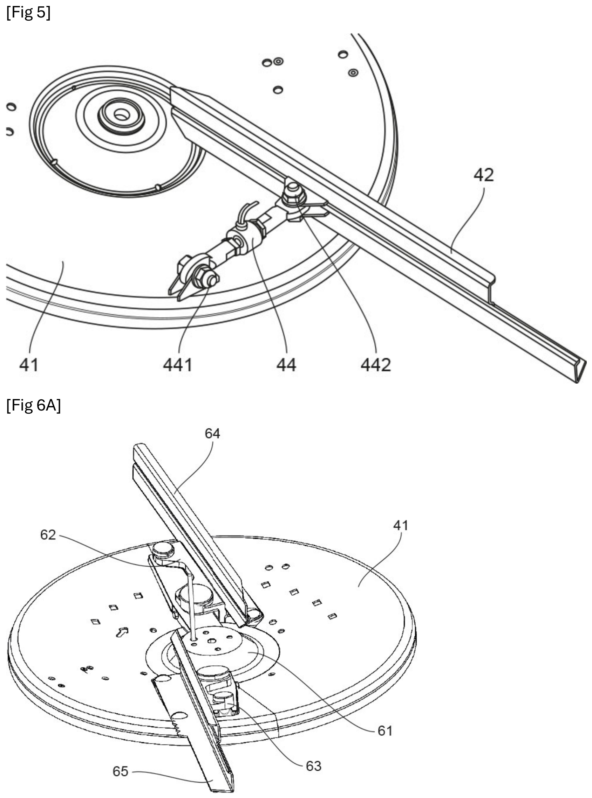

Le capteur de mesure 44 s'étend ici parallèlement au plan du plateau et perpendiculairement à l'axe de la pale 42, lorsque celle-ci est au repos. La solidarisation du capteur est assurée par des rotules autorisant une rotation respectivement par rapport au plateau (441) et à la pale de mesure (442), comme illustré plus précisément sur la vue partielle de la figure 5.

Un capteur de position angulaire 47, par exemple optique ou à effet Hall, est monté au niveau de l'arbre de rotation du plateau 41, de façon à connaître la position angulaire de la pale de mesure pour chaque mesure d'effort effectuée. Selon un mode de réalisation, le nombre de mesures est d'au moins 360 par tour, pour disposer d'une précision de l'ordre du degré. Il est bien sûr possible d'exploiter un nombre supérieur de mesures. Selon une approche préférentielle, les mesures sont effectuées sur plusieurs tours, par exemple de l'ordre de 100 tours, pour effectuer une moyenne à chaque position angulaire.

Les opérations de récupération de mesure, le cas échéant de pré-filtrage, d'association à chaque mesure d'une position angulaire, par exemple sous la forme d'un triplet (numéro de tour, position angulaire, mesure), et/ou de moyennage sont effectuées dans une unité de traitement 46 (ECU), solidaire du plateau (montée par exemple sur la face inférieure du plateau). Elle est reliée au capteur de mesure d'effort (461) et au capteur de position angulaire (462), et met en œuvre avantageusement une liaison sans fil avec une unité d'analyse et de restitution, par exemple un ordinateur de bord (non représenté), qui permet de restituer les informations déduites des mesures, sous la forme de données numériques et/ou de représentations graphiques, notamment une estimation de la forme de la nappe au sol, ainsi que, le cas échéant, des informations d'alerte, relatives à un défaut ou une usure de la pale par exemple.

Une communication filaire peut également être prévue, les informations passant par exemple via un connecteur tournant.

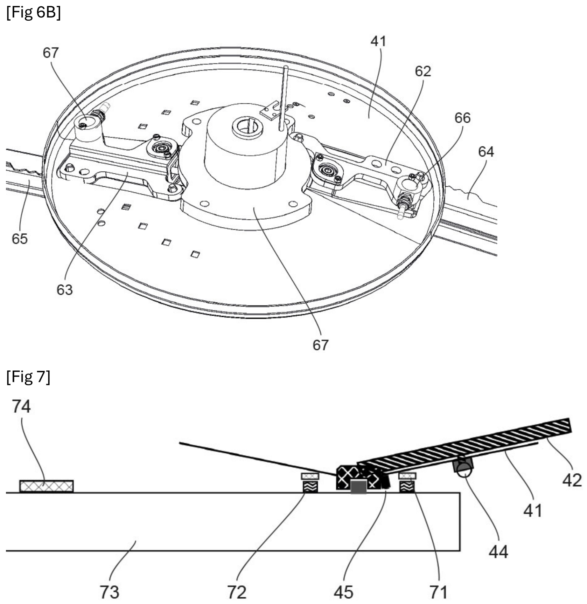

La figure 6A et la figure 6B illustrent une variante de mise en œuvre, respectivement en vue de dessus et vue de dessous. Le plateau 41 porte un moyeu support 61, recevant deux supports de pale 62, 63, montés chacun mobile en rotation respectivement sur un pivot 611, 612 formé sur le moyeu 61. Le support 62 reçoit une pale interchangeable, dite pale longue, 64. Le support 173 reçoit également une pale interchangeable, dite pale courte, 65.

Chaque pale est associée à un capteur d'effort, ou capteur de force, respectivement 66, 67, monté dans un logement 613, 614 prévu à cet effet dans le moyeu 61. Le degré de liberté en rotation de la pale autour de son pivot est bloqué par le capteur d'effort, qui mesure ainsi la force appliquée par les particules dans la pale.

### 5.3 variantes et précisions relatives au(x) capteur(s)

Il est possible de remplacer le point de pivot par un deuxième capteur. Ceci permet d'analyser un transfert d'effort entre deux points (correspondant respectivement au point de liaison de chaque capteur avec la pale) et ainsi d'estimer plus précisément la distribution des particules le long de la pale à chaque instant.

Selon une autre mise en œuvre, une jauge de contrainte peut être directement intégrée dans la structure de la pale.

Le point de pivot peut être remplacé par, ou comprendre, une vis ou un axe instrumenté pour monter la pale.

Par ailleurs, le capteur de mesure d'effort 44 peut être remplacé par d'autres types de capteurs (ou combinés avec un ou plusieurs autres types de capteurs, pour disposer de plusieurs séries de mesures et affiner les calculs).

Selon une première variante, on met en œuvre un capteur de flexion 61. Les autres éléments (capteur angulaire et ECU) sont identiques ou similaires (y inclus les variantes présentées par la suite). La pale de mesure 42 est supportée à sa base par le capteur de flexion 61, permettant de mesurer une image de l'effort de réaction du produit sur la pale.

Selon une deuxième variante, on peut utiliser un capteur de torsion 62, notamment un capteur de couple statique. La pale de mesure 42 est supportée à sa base par le capteur de torsion 62, de façon à mesurer une image de l'effort de réaction du produit sur la pale. Les autres éléments (capteur angulaire et ECU) sont identiques ou similaires (y inclus les variantes présentées par la suite).

Selon une troisième variante, on peut utiliser un capteur piézo-électrique 63. La pale de mesure 42 est associée au capteur piézo-électrique 63, permettant de mesurer une image du « remplissage » de la pale (quantité de produit présente dans la pale à chaque instant de mesure). Après traitement et analyse des mesures de vibration de la pale 42, il est possible d'identifier le moment du lâché du produit. Les autres éléments (capteur angulaire et ECU) sont identiques ou similaires (y inclus les variantes présentées par la suite).

Selon une quatrième variante, le capteur peut être une jauge de contrainte.

Dans un mode de réalisation particulier, plusieurs capteurs peuvent être installés sur chaque pale de mesure, de façon à quantifier la quantité de produits éjectée par chaque pale. Ainsi, il peut être possible notamment d'adapter la quantité dans chaque pale suivant la forme souhaitée de la nappe d'épandage.

### 5.4 variantes et précisions relatives à la mesure angulaire

Comme mentionné plus haut, différents types de capteurs de position angulaire 47 de types connus peuvent être utilisés, par exemple de type optique ou à effet Hall ou codeur angulaire, de façon à connaître la position angulaire de la pale de mesure pour chaque mesure d'effort effectuée.

Selon une variante, le capteur angulaire peut être remplacé par une détection de début de chaque tour de plateau par rapport à une référence fixe, montée par exemple sur le bâti de la machine.

Ce « top tour » permet de connaître le début et la fin de chaque tour, et donc de déterminer la position angulaire de chaque mesure, dès lors que le plateau tourne à une vitesse constante.

Selon une variante, permettant de s'affranchir d'un « top tour », on peut utiliser un capteur de détection du point d'alimentation, ou de dépose, de l'engrais sur le plateau, délivrant par exemple les coordonnées polaires de ce point de dépose. On peut alors combiner cette information avec la détection du début d'effort dans la pale pour remonter à l'effort dans un repère cartésien et obtenir l'angle d'épandage, selon le sens d'avancement de la machine.

### 5.5 exemple de circuit imprimé et d'alimentation équipant le dispositif

Selon un mode de réalisation particulier, l'alimentation électrique des moyens de traitement et de transmission 46 est assurée par une induction de courant dans un bobinage disposé sur un circuit imprimé (PCB) sous le plateau tournant au-dessus d'un champ magnétique statique disposé sur le bâti de la machine, comme illustré sur la vue en coupe simplifiée de la figure 7, illustrant la mise en œuvre d'un circuit imprimé monté sur le plateau, et les éléments avec lesquels il coopère.

Cette approche permet un traitement et une transmission du signal d'effort mesuré sans fil ni batterie. L'alimentation est assurée par une induction de courant dans un bobinage disposé sur le PCB 71, sous le plateau tournant au-dessus d'un champ magnétique statique généré par un aimant disposé sur le bâti 73 de la machine.

Le traitement du signal est synchronisé avec un top à chaque tour, produit par un capteur inductif ou magnétique installé sur le PCB. Un tour moyen peut être créé en empilant plusieurs tours, de façon à diviser d'autant la quantité de données à transmettre.

La transmission radio vers un récepteur distant 74 monté sur le châssis 73 peut être effectuée via une antenne répétée circulairement sur la circonférence du PCB 71, de façon à éviter d'éventuelles coupures de signal suivant la position angulaire du plateau par rapport au récepteur. L'antenne 75 est ici distribuée en trois parties. Il est bien sûr possible de mettre en œuvre un nombre différent de parties, et plus généralement d'utiliser un autre type d'antenne.

On intègre ainsi efficacement l'électronique dans la mécanique de la machine, sans collecteur tournant (ce qui permet de limiter les problèmes de fiabilité et le coût) et sans nécessité de mise en œuvre d'une alimentation électrique dédiée, par exemple sous la forme de batteries ou d'une connexion au réseau électrique de la machine.

Cette approche permet d'éviter la mise en œuvre de contacts électriques tournants ou une transmission filaire. Elle permet d'équiper deux plateaux à un coût réduit (un seul récepteur pour plusieurs émetteurs), et assure une bonne synchronisation de la mesure d'effort avec la position angulaire.

Chaque plateau étant équipé, ceci permet également, de façon simple, une identification du type de plateau de manière électronique.

### 5.6 traitement des mesures

### 5.6.1 aspects généraux du procédé

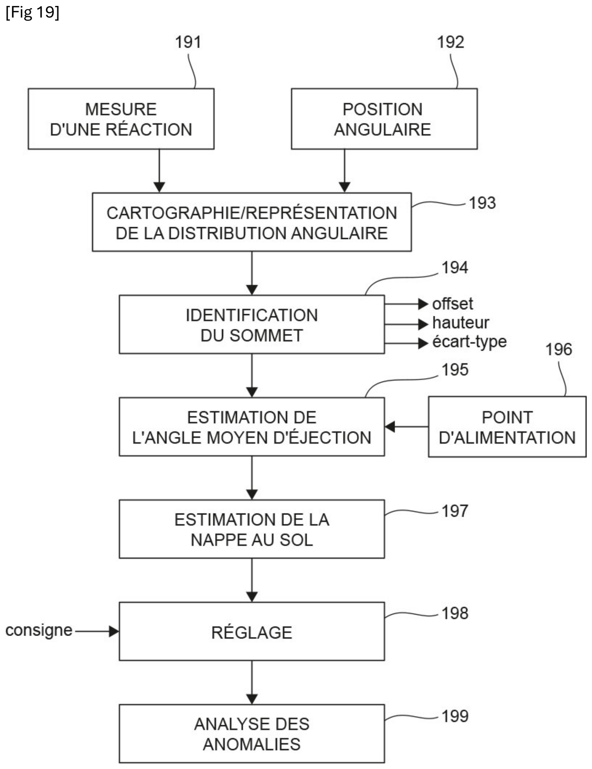

La figure 19 illustre schématiquement les principales étapes du procédé de l'invention.

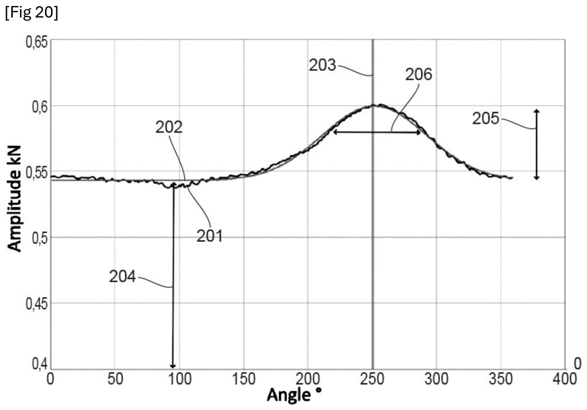

Il comprend une mesure 191 d'une réaction, relevé par un capteur tel que décrit ci-dessus, et d'une mesure associée 192 d'une position angulaire, de façon à disposer d'une série de couples d'informations (réaction, position angulaire), relevés sur une pluralité de tours (par exemple 100 tours), avec par exemple une mesure tous les 0,1°. Ceci permet de construire (193) une cartographie de la distribution angulaire de la réaction, c'est-à-dire un signal brut sur 360° obtenu par la prise en compte (accumulation) des mesures effectuées sur une pluralité de tours (par exemple 100). Selon certains modes de réalisation, on construit à partir de cette cartographie une représentation de la distribution angulaire. Un exemple ce cartographie 201 et de représentation 202 est présenté sur la figure 20.

Sur cette figure 20, on distingue le signal brut, ou cartographie, 201, obtenu par l'accumulation des mesures, et une représentation 202 lissée par traitement, délivrant une courbe correspondant ici à une gaussienne équivalente (il peut s'agir, selon les cas, d'une quasi-gaussienne équivalente, d'une double gaussienne équivalente ou d'une loi normale asymétrique équivalente), dont on peut notamment extraire :
- le sommet 203 (qui correspond à la moyenne angulaire et, en pratique, au début de l'éjection, comme détaillé par la suite),
- un offset 204, représentatif du niveau du signal en l'absence de particules sur la pale,
- une amplitude 205 (hauteur entre l'offset et le sommet) et
- un écart-type 206.

Selon une autre mise en œuvre, notamment lorsque la représentation 202 n'est pas disponible, ou n'est pas nécessaire, on peut également déterminer au moins certaines informations directement à partir de la cartographie 201.

A partir du sommet 203, c'est-à-dire de l'angle correspondant au début de l'éjection, notamment, on estime (195) l'angle moyen d'éjection, par exemple selon l'une des approches décrites ci-après. Il est également possible d'appliquer un décalage par rapport au sommet, par exemple en tenant compte de l'écart-type. Cette estimation peut, selon les approches, être effectuée sur la cartographie ou sur la représentation équivalente.

Pour plus de précision, d'autres informations peuvent être prises en compte, dont la position 196 du point d'alimentation.

Selon un aspect particulier de l'invention, d'autres informations sont déterminées, notamment pour estimer (197) la nappe au sol.

Il est également possible de mettre en œuvre des réglages 198 automatisés du dispositif d'épandage, en fonction de l'analyse du signal et d'une consigne d'épandage, par exemple sous la forme d'une boucle de rétroaction telle que décrite par la suite.

L'analyse du signal peut également permettre de détecter des anomalies (encrassement par exemple) ou des défauts (usure par exemple).

Ainsi, l'invention repose sur une analyse en temps réel du signal capté par un ou plusieurs capteurs placés directement sur les pales d'éjection d'un épandeur agricole. Le signal bruité et cyclique obtenu est transformé en un ensemble de données exploitables, par exemple par un ajustement gaussien ou correspondant à une loi normale asymétrique, sur un empilement de tours de disque. Ceci permet d'extraire un ou plusieurs paramètres, dont la moyenne angulaire (sommet) 203, l'écart-type 206, l'amplitude maximale (hauteur) 204 et le décalage d'offset 205.

La moyenne représente l'angle où la force atteint son maximum. L'écart type quantifie la dispersion angulaire autour de ce centre. L'amplitude indique la valeur maximale de l'effort, tandis que l'offset corrige les dérives de base du capteur.

Ces quatre paramètres sont calculés sur un « tour moyen » obtenu en empilant les signaux de (par exemple) 100 tours consécutifs. L'ajustement gaussien est réalisé à une fréquence d'échantillonnage élevée, par exemple de 5 kHz, garantissant ainsi une résolution angulaire fine (≈0,1°).

La valeur moyenne du paramètre angle est ensuite comparée à la mesure brute pour confirmer la cohérence du modèle. On constate que les écarts sont systématiquement inférieurs à 2°. Le résultat est un profil gaussien normalisé qui peut servir de base aux modèles prédictifs d'angle d'éjection et de débit.

### 5.6.2 premier exemple d'analyse du signal 202

On présente ci-après un premier exemple d'analyse du signal filtré issu du capteur d'effort et du capteur de la position angulaire du plateau, délivré par l'ECU.

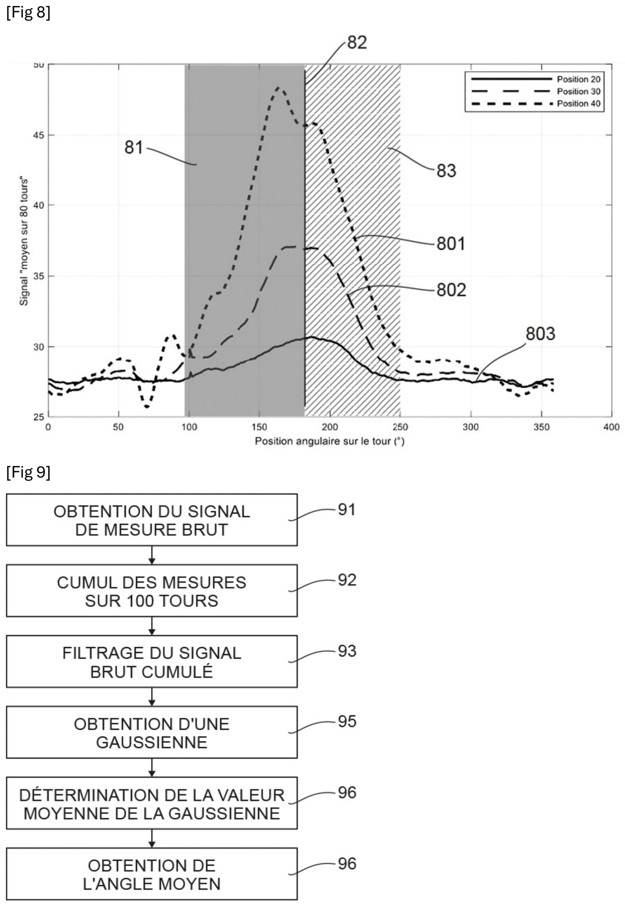

Le traitement permet de déterminer, comme illustré par la figure 8, présentant trois séries de mesures 801, 802, 803 correspondant à trois positions distinctes de goulotte :
- une zone angulaire de montée en charge de la pale 81,
- une valeur maximale du signal 82, et
- une zone angulaire de déchargement de la pale 83.

On constate à nouveau que, contrairement à ce qu'indique l'art antérieur, ces courbes ne présentent pas une valeur constante, mais définissent au contraire chacune une « quasi-gaussienne » sur le signal de l'effort F sur la pale (en ordonnée) en fonction de l'angle du plateau (en abscisse), que l'on peut écrire sous la forme :$F = f \left(position angulaire\right)$

Cette gaussienne se cumule à un effort créé par la résistance de l'air sur les pales. Cet effort qui est constant sur toute la révolution du plateau, dès lors que celui-ci se déplace à vitesse constante sur sa révolution). Il définit un « offset », que l'on peut soustraire des mesures.

Selon l'analyse effectuée par les inventeurs, on constate que la partie croissante 81 de cette gaussienne correspond à la phase de montée en charge de la pale, c'est-à-dire au cumul de la prise en pale d'une certaine quantité de produit et du transport du produit le long de la pale.

Cette gaussienne présente ensuite une phase décroissante 83 qui correspond à la phase d'éjection du produit. Un élément essentiel de l'analyse du signal est donc la détection du sommet de la courbe, c'est-à-dire du début de la phase d'éjection des particules.

Le retour au signal initial correspond à l'effort sur la pale en rotation stabilisée, les mesures étant effectuées pour chaque salve d'engrais, c'est-à-dire chaque tour de plateau.

Il est souhaitable de prendre en compte un nombre relativement élevé de tours des plateaux pour réduire le bruit sur la mesure. On met en œuvre par exemple 100 tours pour des débits compris entre 10 et 150gm/min. On peut augmenter le nombre de tours pour des débits faibles et inversement, par exemple, pour des débits inférieurs à 10kg/min, on multiplie par 2 le nombre de tours nécessaires. Inversement, pour des débits supérieurs à150kg/min, on peut diviser par 2 le nombre de tours nécessaires.

Par ailleurs, il est possible d'appliquer une extraction sur une zone angulaire prédéterminée non significative et/ou bruitée, par exemple pour ne pas prendre en compte une plage de l'ordre de 30° où il y a des brosses frottant sur la pale.

Selon ce premier mode de réalisation, on met en place les étapes présentées sur la figure 9 :
- Étape 91 : obtention dans l'ECU du signal de mesure brut, délivré par le(s) capteur(s) sur un tour, à plusieurs (de préférence au moins 360) positions angulaires de la pale ;
- Étape 92 : cumul des mesures à chaque position angulaire sur une pluralité de tours, par exemple 100 tours, pour obtenir un signal de mesure brut cumulé ;
- Étape 93 : filtrage du signal de mesure brut cumulé, afin de supprimer au moins une partie du bruit, délivrant un signal de mesure brut cumulé et filtré, ou cartographie ;
- Étape 94 : obtention d'une gaussienne (figure 8), ou courbe de Gauss, équivalente au signal de mesure brut cumulé et filtré ;
- Étape 95 : détermination de la valeur moyenne 84 de la gaussienne, ou valeur maximale du signal, correspondant au début de la décharge de la pale ;
- Étape 96: obtention de l'angle moyen, correspondant à 50% de la valeur maximale obtenue à l'étape 95.

### 5.6.3 deuxième exemple d'analyse du signal 202

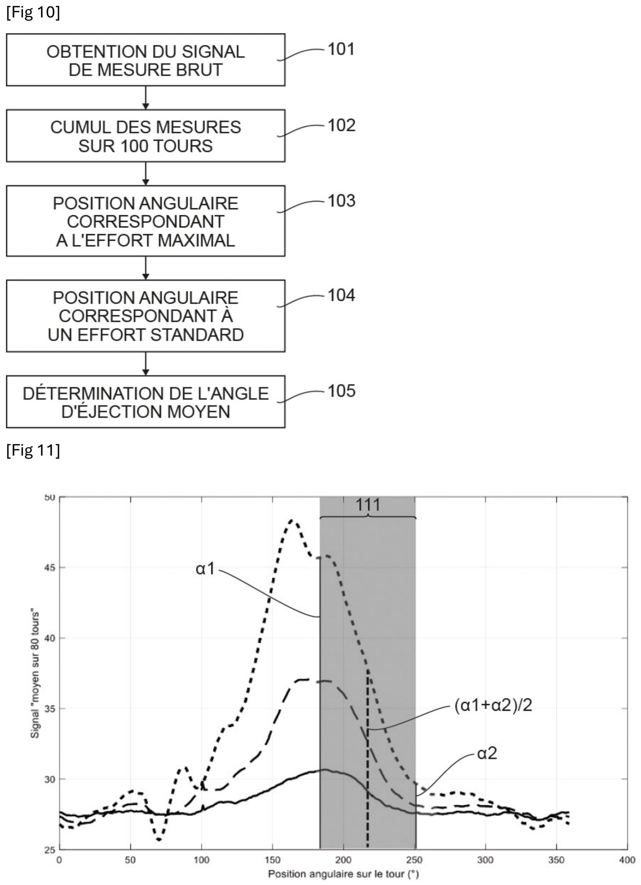

Selon un deuxième mode de réalisation, illustré par l'organigramme de la figure 10 et l'exemple de la figure 11, on met en œuvre les étapes suivantes (les deux premières étant identiques à celles du premier mode de réalisation) :
- Étape 101 : obtention dans l'ECU du signal de mesure brut, délivré par le(s) capteur(s) sur un tour, à plusieurs (de préférence au moins 360) positions angulaires de la pale ;
- Étape102 : cumul des mesures à chaque position angulaire sur une pluralité de tours, par exemple 100 tours, pour obtenir un signal de mesure brut cumulé, ou cartographie ;
- Étape 103 : identification de la position angulaire α1 correspondant à l'effort maximal (par exemple moyenne des maxima des trois courbes) ;
- Étape 104 : identification de la position angulaire α2 correspondant à un retour à un effort standard, ou minimal, correspondant par exemple à 20% de l'effort maximal ;
- Étape 105 : détermination de l'angle d'éjection moyen, par calcul de la moyenne entre les angles α1 et α2 (angle moyen d'éjection estimé = (α1 + α2) / 2.

Dans l'exemple de la figure 11, on détermine ainsi que :
- α1 = 177° ;
- α2 = 251° ;
- $angle moyen d ′ éjection estimé = \left(α1+α2\right) / 2 = 214 ° ;$
- période 111 d'éjection du produit de la pale : plage angulaire comprise entre α1 et α2.

### 5.6.4 variantes et compléments

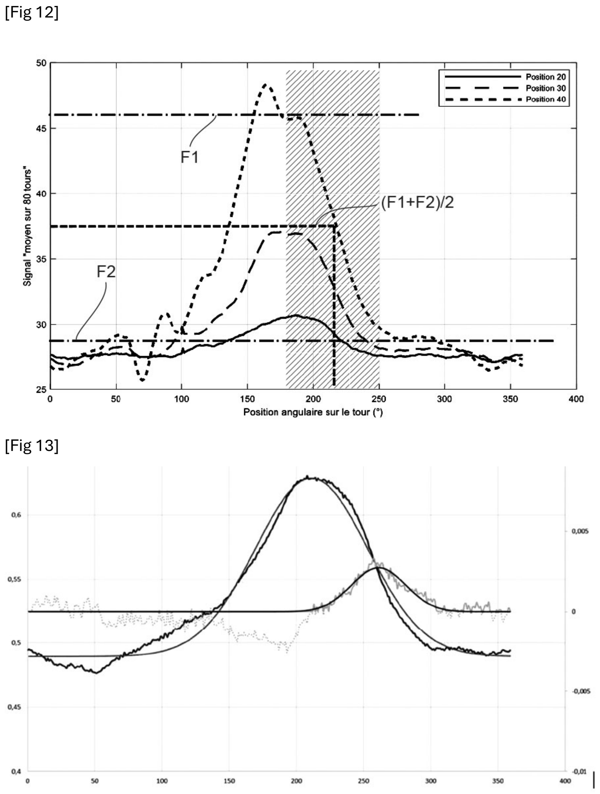

Selon une variante, l'angle moyen peut être déterminé, comme illustré sur la figure 12, en effectuant une moyenne entre l'effort maximal (F1 = 47 N sur la figure 13) et l'effort minimal (F2 = 29 N), pour obtenir l'angle correspondant à (F1 + F2) / 2 = 38, soit un angle de 215°, identique à un degré près au calcul précédent.

Dans le cas où la pale de mesure est une pale étagée (type de pale couramment utilisé en pratique), le dispositif peut comprendre deux capteurs d'effort distribués sur la hauteur de ladite pale, celle-ci comprenant deux canaux étagés et on traitera le signal en deux temps, correspondant à chacun des deux canaux. L'angle moyen de la pale sera la moyenne de l'étage haut et de l'étage bas.

Pour encore plus de précision, le signal de mesure pourra ne pas être approximé par une gaussienne symétrique mais par une bi-gaussienne ayant une valeur médiane et deux écarts-type, comme illustré par la figure 13.

Comme ceci apparaît sur les exemples donnés, l'approche de l'invention permet d'obtenir des résultats avec une très bonne précision, notamment par rapport aux techniques de l'art antérieur, et de façon très rapide. Ces résultats ont été corroborés par de nombreux tests, sur différents produits et pour différentes conditions.

### 5.7 application au traitement des bordures

L'invention permet en outre d'obtenir d'autres informations, au-delà de l'angle moyen d'éjection, telles que l'écart-type ou l'asymétrie.

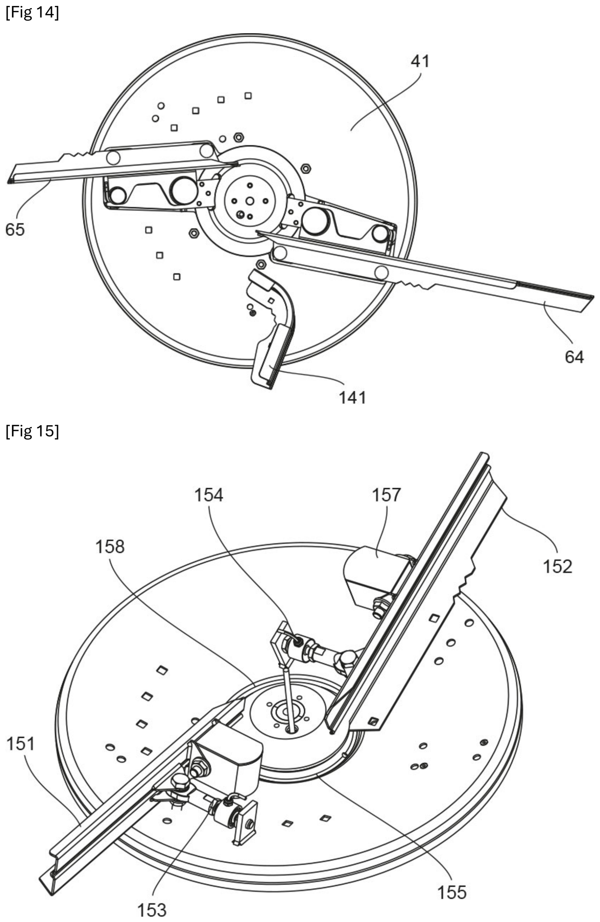

Il est en outre possible de détecter et optimiser des épandages spécifiques par exemple l'épandage en bordure de parcelle. Cette approche, introduite dans le document EP1955579, repose sur un contrôle du taux d'alimentation de produit épandu par la pale longue et le taux épandu par la pale de bordure 141. Il peut notamment s'agir d'une pale incurvée 141, dite pale Tribord^{®} dans les produits du Demandeur, tel qu'illustré en figure 14 (les autres éléments étant déjà décrits en lien avec les figures précédentes). On peut ainsi effectuer un épandage plus écologique en bordure de parcelle en visant un taux d'alimentation de 0% dans la pale longue et de 100% dans la pale de bordure.

Pour cela, on peut équiper un capteur d'effort sur la pale longue et un capteur sur la pale de bordure et mesurer la quantité de produit intercepté par chaque pale.

Dans un autre mode de réalisation, on détermine une consigne de ce que doit être l'effort sur la pale longue, par exemple une proportion réduite de l'effort standard (fonctionnement « en pleine largeur »), et on règle la position du point de chute en fonction de l'effort mesuré sur la pale, pour approcher cette consigne.

Par exemple, on considère l'effort sur la pale longue en épandage pleine largeur, qu'on appelle "Fpl", et on fixe une consigne à l'effort sur cette pale lorsqu'on souhaite un épandage de bordure, appelée "F bord consigne", par exemple : F bord consigne = A x Fpl, que l'on compare à l'effort mesuré, appelé "Fbord mesuré".

Ceci permet de piloter le système d'épandage, par exemple de la façon suivante :
- Si Fbord mesuré > F bord consigne, alors on augmente l'action du système de bordure (décalage du point de chute du système décrit dans EP1955759) ;
- Si Fbord mesuré < F bord consigne, alors on réduit l'action du système de bordure (décalage du point de chute du système décrit dans EP1955759).

Avec A ayant une valeur pour les bordures dite environnementale (par exemple A = 0.2), et une autre valeur pour les bordures dite rendement (par exemple A = 0.5).

### 5.8 autres exemples d'applications

L'invention permet par ailleurs de mettre en œuvre d'autres services complémentaires, tels que la détection de l'usure ou de l'encrassement d'une pale, permettant d'effectuer une maintenance préventive ou une intervention d'entretien.

Pour déterminer une usure de la pale, on peut détecter l'apparition d'un signal s'éloignant du signal standard de la pale
- agrandissement de l'écart-type ;
- apparition de fréquence spécifique liée au motif d'usure (usure en vague de la pale), détectée par exemple en appliquant une transformation de Fourier rapide (FFT) sur le signal.

On peut également détecter un encrassement d'une pale, en repérant une augmentation de l'effort sur cette pale pour un régime de rotation donné.

Le débit peut être estimé selon au moins deux méthodes distinctes :
- en calculant l'intégrale (aire) du signal mesuré ; ou
- en mesurant le signal maximum.

Pour plus de précision, ces deux valeurs peuvent être recoupées.

Il est également possible de déterminer une information représentative du produit épandu, en mesurant l'écart-type du signal sur l'angle et en analysant l'asymétrie du signal, qui varie en fonction du produit.

Comme illustré sur la figure 15, les deux pales 151 et 152 peuvent être équipés de capteurs d'effort. Dans cet exemple de mise en œuvre, on illustre deux montages possibles pour le capteur :
- le capteur d'effort 153 est monté entre le pivot 155 et la circonférence du plateau, et fonctionne en compression ;
- le capteur d'effort 154 est monté entre le pivot 156 et l'axe du plateau, et fonctionne en traction / compression.

### 5.9 exemple de calcul théorique d'une gaussienne et de l'amplitude cumulé

Pour modéliser la courbe de réponse du capteur, on peut appliquer la loi normale définie par l'équation la fonction de densité de probabilité (ou fonction de distribution) : $f \left(x\right) = \frac{1}{σ \sqrt{2 π}} {e}^{- \frac{{\left(x-μ\right)}^{2}}{2 {σ}^{2}}}$

Cette fonction peut notamment être mise en œuvre dans un tableur, par exemple en utilisant la « fonction de répartition » (ou fonction cumulative de distribution) qui représente la probabilité cumulative de - infini jusqu'à x. Pour une loi normale, elle est définie comme l'intégrale de la fonction de densité de probabilité : $Φ \left(x\right) = {\int }_{- ∞}^{x} f \left(x\right) = \frac{1}{2} \left(1+erf\left(\frac{x - μ}{σ \sqrt{2}}\right)\right)$

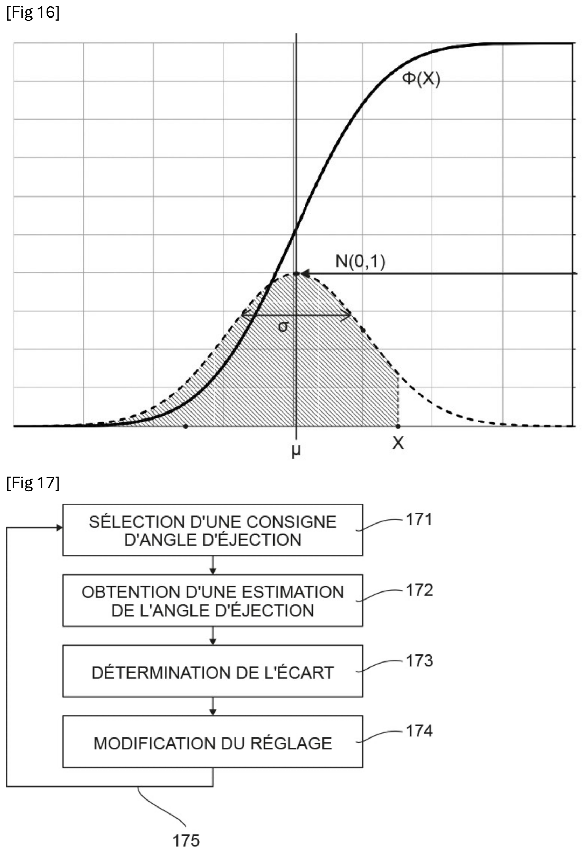

La figure 16 illustre l'amplitude cumulée et la gaussienne correspondante, avec :
µ = espérance ;
σ = écart type.

### 5.10 estimation de la nappe au sol

En utilisant une information supplémentaire représentative de l'angle alfa (angle de la vitesse d'éjection) formé entre la pale et la direction d'éjection de l'engrais, il est possible d'estimer la position angulaire de la nappe au sol, et non seulement de disposer d'une information en sortie de disque. Par exemple, on peut utiliser des informations représentatives de la forme des granulés déterminées et fournies par les constructeurs de systèmes d'épandage (par exemple le service de réglage Fertitest^{®} du Demandeur) ou mesuré à l'aide de moyens dédiés (par exemple tels que décrits dans le document EP4159017).

On peut également déduire du module de l'effort mesuré une information représentative du débit massique d'engrais passant dans le plateau.

On sait que la nappe au sol est fonction non seulement de l'angle d'éjection, mais également du type de produit épandu et du débit. Les inventeurs ont également constaté qu'il existe des variations de l'écart-type au sol, pour un écart-type d'éjection donné.

Les analyses ont permis de caractériser un outil de prédiction mathématique de l'angle au sol et un outil de prédiction mathématique du débit.

Ainsi, l'angle au sol peut être estimé à l'aide d'une équation polynomiale tenant compte notamment des variables suivantes :
x : écart-type sur le signal mesuré ;
y : delta angulaire entre angle du point de dépose du produit et l'angle moyen de la gaussienne mesurée ;
w : amplitude maximum de la gaussienne.

L'équation peut alors s'écrire : ${α}_{sol} = A . x + B . x . y + C . y + D . w + E$ où A, B, C, D et E sont des constantes prédéterminées à partir d'une pluralité de mesures, en fonction notamment des caractéristiques de l'épandeur utilisé. Dans un exemple particulier applicable à un épandeur fabriqué et distribué par le Demandeur, ces constantes sont :
A : entre 4,8 et 5,4
B : entre -0,04 et -0,06
C : entre 2,5 et 3
D : entre -0,01 et -0,02
E : entre -150 et -160

Il est possible d'obtenir de la même façon une information sur le débit.

Il est également possible d'estimer l'écart-type sur la portée de projection, qui apparaît relativement corrélé à l'écart-type d'éjection, avec une équation dont les variables sont :
x : écart-type de l'angle d'éjection ;
z : delta goulotte et angle capteur ;
u : amplitude cumulée.

L'équation peut alors s'écrire : $écart - type projection = A " . x + B " . u + C " . z + D "$ où A", B", C" et D" sont des constantes prédéterminées, en fonction notamment des caractéristiques de l'épandeur utilisé. Dans un exemple particulier applicable à un épandeur fabriqué et distribué par le Demandeur, ces constantes peuvent être :
A" : compris entre 0,06 et 0,07
B" : compris entre 0,005 et 0,01
C" : compris entre 0,02 et 0,03
D" : compris entre 1,5 et 1,6

### 5.11 pilotage du système d'épandage

L'invention permet également de contrôler l'épandage, c'est-à-dire la forme (zone de couverture) et/ou la position de la nappe au sol (voir figure 1). Il est important de contrôler ces aspects, en particulier en bordure ou en pointe de champ, comme proposé dans le document EP2409559.

En disposant d'une information précise sur l'angle d'épandage et l'écart-type, on peut en effet estimer la nappe au sol, et en conséquence vérifier que le résultat obtenu correspond à celui souhaité, et le cas échéant adapter les réglages, par exemple selon l'approche décrite dans EP2409559.

En particulier, il est possible de mettre en œuvre une boucle de rétroaction telle qu'illustrée en figure 17, comprenant les sous-étapes suivantes :
- sélection 171, par le système de pilotage de la machine, d'une consigne d'angle d'éjection souhaitée, pour un produit et une largeur de travail de donnée. Cette consigne permet par exemple d'agir sur la position du point de chute (pour chacun des disques) ;
- obtention 172 d'une estimation de l'angle de sortie des particules, à l'aide du procédé décrit précédemment ;
- détermination 173 d'un écart entre ladite estimation de l'angle d'éjection des particules et ladite consigne d'angle d'éjection souhaitée ;
- modification 174 d'un point d'alimentation desdites particules par rapport auxdites pales, pour réduire ledit écart, à l'aide d'au moins un actionneur dudit système d'épandage.

Cette boucle de rétroaction est répétée (175) à intervalles réguliers, par exemple chaque seconde, afin que la nappe obtenue au sol soit le plus proche possible de celle souhaitée.

Plus généralement, l'étape 174 peut agir sur d'autres aspects, tels que la position d'au moins une desdites pales (distance par rapport à l'arbre notamment), la vitesse de rotation du plateau (ou des pales), l'inclinaison dudit système d'épandage... Ces réglages peuvent se faire par l'intermédiaire d'actionneurs et/ou manuellement.

Cette approche peut par ailleurs permettre d'agir sur d'autres caractéristiques de la nappe, en fonction des données estimées adaptées et de consignes correspondantes.

### 5.12 variation de la trajectoire en fonction du point de dépôt

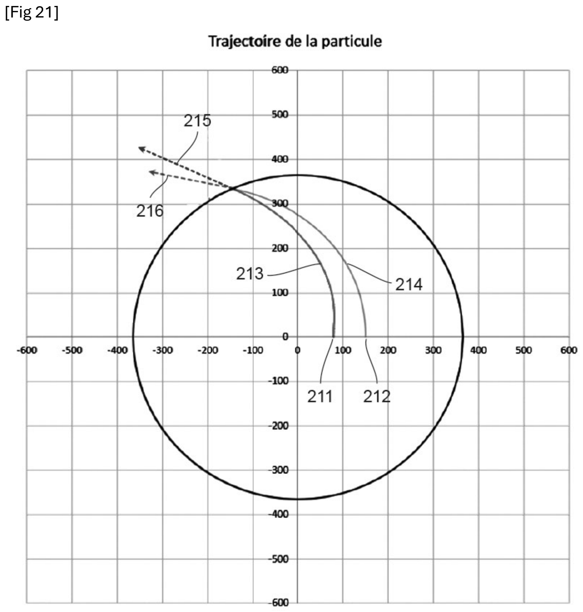

Lorsque le produit en poudre ou granulé frotte différemment dans la pale, la force de blocage dû au frottement varie et modifie la trajectoire d'éjection. Le point de dépôt (ou point de chute ou point d'alimentation) constitue donc une variable importante pour estimer l'angle réel au sol, comme illustré sur la figure 21.
Dans le modèle gaussien présenté précédemment, le paramètre « moyenne angulaire », ou sommet, correspond à l'angle où l'effort atteint son maximum, mais il ne reflète pas seul la trajectoire finale. Ainsi, sur la figure 21, on constate que lorsque le point de dépôt 211, 212 est éloigné de l'axe de rotation, la trajectoire 213, 214 dans la pale varie. En conséquence, la direction 215, 216 en sortie de pale varie également.

Il convient donc d'ajouter un facteur de correction basé sur la position du point de dépôt pour disposer d'une information précise sur la direction de sortie.

### 5.13 variante de mise en oeuvre : mesure de la réaction sur l'arbre de rotation

Selon une autre approche, la mesure d'une réaction mécanique de ladite ou au moins une desdites pales d'éjection peut être mesuré sur l'arbre de rotation portant la pale de mesure, cet arbre subissant des forces représentatives de cette réaction mécanique.

Notamment, il est possible de mesurer un ou plusieurs efforts appliqués sur l'arbre de rotation, correspondant à un effort de blocage en translation du plateau.

Selon un mode de réalisation particulier, lesdits moyens de mesure délivrent une information représentative d'une direction dudit effort appliqué sur ledit arbre, de façon que lesdits moyens de traitement délivrent ladite estimation dudit angle d'éjection.

Notamment, lesdits moyens de mesure délivrent deux mesures selon deux axes perpendiculaires entre eux et s'étendant dans un plan perpendiculaire audit arbre.

Lesdits moyens de mesure peuvent également délivrer une troisième mesure selon l'axe dudit arbre.

Selon un mode de réalisation particulier, lesdits moyens de mesure comprennent un capteur 6 axes.

Selon un mode de réalisation particulier, lesdits moyens de mesure comprennent deux capteurs montés perpendiculairement l'un par rapport à l'autre.

Selon un autre mode de réalisation, lesdits moyens de mesure comprennent au moins deux, et de préférence trois, rondelles dynamométriques distribuées autour dudit arbre.

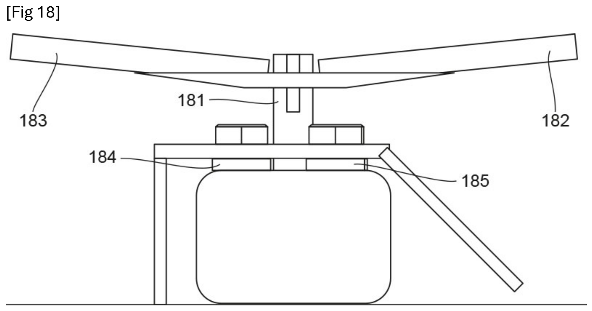

Ce mode de réalisation est illustré schématiquement sur la figure 18.

L'arbre 181 entraine en rotation deux pales 182 et 183. L'effort imprimé par les particules reçues par au moins une des pales agit sur l'arbre, qui se déplace légèrement en conséquence. Ce déplacement est détecté par des rondelles dynamométriques 184 et 185 (une troisième rondelle, non visible, étant présente pour disposer d'une mesure efficace) placées à proximité de l'arbre et en contact avec celui-ci.

Les mesures délivrées par ces rondelles dynamométriques sont ensuite analysées par les moyens de traitement, de façon à estimer la réaction de la pale en fonction de sa position angulaire, déterminée selon une des approches décrites précédemment. Les autres moyens et procédés décrits précédemment peuvent ensuite être mis en œuvre de façon identique ou similaire.

## Revendications

1. Procédé d'estimation et d'exploitation de données représentatives de l'éjection de particules, dont au moins un angle moyen d'éjection, dans un système d'épandage comprenant au moins une pale d'éjection entrainée en rotation par un arbre de rotation, dont au moins une pale de mesure, équipée de moyens de mesure d'une réaction mécanique, variant notamment en présence desdites particules dans ladite pale de mesure,
**caractérisé en ce qu'**il comprend les étapes de :
- obtention d'une pluralité de mesures d'une réaction délivrées par lesdits moyens de mesure, réalisée sur une série de tours de ladite pale de mesure ;
- association, à chaque mesure d'une réaction, d'une information représentative de la position angulaire de ladite pale de mesure ;
- construction d'une cartographie de la distribution angulaire de la réaction sur ladite pale de mesure sur un tour, à partir de ladite pluralité de mesures ;
- identification d'un sommet sur ladite cartographie de la distribution angulaire de la réaction, correspondant à un angle de début de l'épandage ;
- estimation dudit angle moyen d'éjection, tenant compte dudit sommet.

2. Procédé selon la revendication 1, **caractérisé en ce que** ladite étape de d'identification d'un sommet, prend en compte au moins une autre information issue de ladite cartographie de la distribution angulaire de la réaction.

3. Procédé selon la revendication 2, **caractérisé en ce qu'**il comprend les étapes de :
- détermination d'une portion descendante de ladite cartographie de la distribution angulaire suivant ledit sommet, correspondant à une phase angulaire de distribution de particules ;
- détermination d'un angle moyen d'éjection, situé dans ladite portion descendante.

4. Procédé selon l'une quelconque des revendications 1 à 3, **caractérisé en ce que** ladite étape de construction d'une cartographie comprend une sous-étape d'identification d'une gaussienne équivalente, d'une quasi-gaussienne équivalente, d'une double gaussienne équivalente ou d'une loi normale asymétrique équivalente, délivrant au moins une information représentative de l'angle moyen d'éjection et de l'écart-type d'éjection.

5. Procédé selon la revendication 4, **caractérisé en ce que** ladite sous-étape d'estimation dudit angle moyen d'éjection tient compte de la position du point d'alimentation et/ou l'angle de dépose du produit sur le plateau.

6. Procédé selon l'une quelconque des revendications 4 et 5, **caractérisé en ce que** ladite sous-étape d'identification délivre également une information d'offset, représentatif de la valeur de ladite distribution angulaire en l'absence de particules, et une information de hauteur, représentatif de l'écart entre ladite valeur d'offset et ledit sommet.

7. Procédé selon l'une quelconque des revendications 1 à 6, **caractérisé en ce qu'**il comprend une étape de réglage d'au moins un élément dudit système d'épandage permettant de faire varier au moins une caractéristique de la nappe d'épandage au sol, à partir d'une comparaison entre ladite estimation d'au moins une donnée représentative de l'éjection des particules et une consigne correspondante,
ledit réglage agissant sur un point d'alimentation en particules, une position d'au moins une desdites pales, une vitesse de rotation desdites pales et/ou une inclinaison dudit système d'épandage.

8. Procédé selon la revendication 7, **caractérisé en ce que** ladite étape de réglage met en œuvre une boucle de rétroaction comprenant les sous-étapes suivantes :
- sélection d'une consigne d'angle d'éjection moyen souhaité, pour un produit et une largeur de travail de donnée ;
- obtention d'une estimation de l'angle d'éjection moyen réel des particules ;
- détermination d'un écart entre ladite estimation de l'angle d'éjection des particules et ladite consigne d'angle d'éjection souhaitée ;
- modification d'un point d'alimentation desdites particules par rapport auxdites pales, pour réduire ledit écart, à l'aide d'au moins un actionneur dudit système d'épandage.

9. Procédé selon l'une quelconque des revendications 7 et 8, **caractérisé en ce qu'**il comprend une étape de pilotage d'un système d'épandage en bordure mettant en œuvre une pale.

10. Procédé selon l'une quelconque des revendications 1 à 9, **caractérisé en ce qu'**il comprend une étape d'estimation d'au moins une information représentative de la nappe au sol, tenant compte de ladite distribution angulaire.

11. Procédé selon la revendication 10, **caractérisé en ce que** ladite étape d'estimation d'au moins une information représentative de la nappe au sol comprend une sous-étape d'estimation de l'angle moyen de la nappe au sol, tenant compte dudit sommet et/ou de l'angle moyen d'éjection et d'au moins une autre des informations appartenant au groupe comprenant :
- une information représentative du type de particules épandues ;
- une information représentative de la machine de distribution et/ou du plateau et/ou de la pale de mesure ;
- une information représentative de la position du point d'alimentation des particules ;
- une information représentative de la vitesse de rotation de la ou des pales.

12. Procédé selon la revendication 11, **caractérisé en ce qu'**il comprend une sous-étape de d'estimation de la direction d'éjection des particules, au niveau de l'extrémité de sortie de la pale, tenant compte du point d'alimentation des particules.

13. Procédé selon l'une quelconque des revendications 1 à 12, **caractérisé en ce qu'**il comprend une étape d'analyse d'une variation de ladite distribution angulaire, délivrant une information représentative d'une usure de ladite pale de mesure en fonction d'une analyse du bruit et/ou d'au moins fréquence spécifique sur ledit signal de distribution angulaire.

14. Procédé selon l'une quelconque des revendications 1 à 13, **caractérisé en ce qu'**il comprend une étape d'analyse d'une variation de la réaction sur ladite pale de mesure, délivrant une information d'encrassement de ladite pale en fonction d'une augmentation prédéterminée de ladite réaction.

15. Dispositif d'estimation de données représentatives d'au moins une caractéristique d'éjection de particules, dont au moins un angle moyen d'éjection (Øₘ), dans un système d'épandage comprenant au moins une pale d'éjection (42, 43 ; 64, 65, 141 ; 151, 152) entrainée en rotation par un arbre de rotation,
**caractérisé en ce qu'**il comprend des moyens (44 ; 62, 63 ; 153, 154) de mesure d'une réaction mécanique d'au moins une desdites pales d'éjection, dite pale de mesure, au passage desdites particules dans chacune desdites pales de mesure, délivrant un signal représentatif de ladite réaction,
des moyens (47) d'obtention d'une information représentative de la position angulaire de ladite pale de mesure,
et des moyens (46) de traitement de données mettant en œuvre le procédé selon l'une quelconque des revendications 1 à 14.

16. Dispositif selon la revendication 15, **caractérisé en ce qu'**il met en œuvre une boucle de rétroaction de moyens de réglage d'au moins un élément dudit système d'épandage permettant de faire varier au moins une caractéristique de la nappe d'épandage au sol, comparant ladite estimation à une consigne correspondante et adaptant le réglage du ou desdits éléments du système d'épandage en conséquence.
